# EUROPEAN PATENT APPLICATION

(11) **EP 4 847 893 A1**
(43) Date of publication of application: **02.12.2026**
(21) Application number: 25179207.3
(22) Date of filing: 27.05.2025
(51) Int. Cl.: G01K 1/024, G01K 1/08, G01K 7/02

(54) **FOOD PROBE ARRANGEMENT**

(71) Applicant: ELECTROLUX APPLIANCES AKTIEBOLAG, 105 45 Stockholm (SE)
(72) Inventor: QUIROGA, Santiago David, 47121 Forli (IT); CHIA, Ian, 91541 Rothenburg ob der Tauber (DE); VENTURINI, Gianluca, 47122 Forli (IT); Picardi, Fabio, 33170 Pordenone (IT); SAPORETTI, Marco, 47122 Forli (IT); FARALDI, Paolo, 47122 Forli (IT); HIMMELEIN, Benjamin, 91541 Rothenburg ob der Tauber (DE); LANDO, Giuseppe, 47122 Forli (IT)
(74) Representative: Electrolux Group Patents

(57) **Abstract**

The invention provides a food probe arrangement (2, 3) comprising: a first temperature probe (4) having: a first elongate element (6) having a first end portion (6a) and a second end portion (6b) opposite to the first end portion (6a), and a first temperature sensor (9) arranged at the first end portion (6a) of the first elongate element and being configured to provide a first temperature signal, and a second temperature probe (10) having: a second elongate element (12) having a first end portion (12a) and a second end portion (12b) opposite to the first end portion (12a), and a second temperature sensor (14) arranged at the first end portion (12a) of the second elongate element and being configured to provide a second temperature signal, wherein the second end portion (6b) of the first elongate element (6) is permanently or detachably electrically connected to the second end portion (12b) of the second elongate element (12).

## Description

### FIELD OF THE INVENTION

The present invention relates to a food probe arrangement, a temperature probe, and a food probe kit comprising such temperature probe.

### BACKGROUND

Cooking is a process that involves the application of heat to food. The main goal of this process is to transform the food into a form that is more palatable, safe, and digestible. The temperature at which food is cooked plays a critical role in determining the cooking time and the quality of the final product. A food probe, also known as a cooking thermometer or meat thermometer, is used to measure the core temperature of food, such as roasts, steaks, fillets, cutlets, or other cooked food. The degree of "doneness" of food correlates closely with the internal temperature, so that a thermometer reading indicates when the food is cooked as desired. These kind of food probes may be used in the oven or on the hob. There are wired or wireless food probes. However, different food probes are necessary for measuring the temperature of a cooking medium such as oil for frying food on a hob compared to food probes for measuring the core temperature of food. In some cases, it is necessary to start cooking on the hob and then transfer the food to the oven for further cooking or vice versa. In such cases, users must switch between different types of food probes, leading to inconvenience and potential inefficiencies in the cooking process.

### SUMMARY OF THE INVENTION

It is an object of the invention to provide a food probe arrangement, a temperature probe and a food probe kit with an improved versatility and in particular with a facilitated integration in the ecosystem of a hob and oven.

The invention is defined in the independent claims. Particular embodiments are set out in the dependent claims.

According to the invention a food probe arrangement is provided. The food probe arrangement comprises: a first temperature probe having a first elongate element having a first end portion and a second end portion opposite to the first end portion, and a first temperature sensor arranged at the first end portion of the first elongate element and being configured to provide a first temperature signal; and a second temperature probe having a second elongate element having a first end portion and a second end portion opposite to the first end portion, and a second temperature sensor arranged at the first end portion of the second elongate element and being configured to provide a second temperature signal. The second end portion of the first elongate element is permanently or detachably electrically connected to the second end portion of the second elongate element.

Chefs and home cooks often encounter situations where they need to start cooking on the hob and then transfer the food to the oven for further cooking or vice versa. In such cases, users may switch between different types of food probes. For example a wireless food probe with a handle to be positioned at a pot or pan may be used when cooking on the hob and a wired food probe may be used when cooking the food in the oven. The wired food probe may result in entanglement of the connection line of the wired food probe and such wired food probe is therefore not suitable when cooking on the hob, as the connection line can lead to safety concerns. The connection line may get tangled between the pots or being exposed to high temperature, such as flames or radiant surfaces, damaging the food probe. Using two different standalone food probes for the oven and the hob leads to inconvenience and potential inefficiencies in the cooking process. In particular, it may be difficult to integrate two different food probes into the ecosystem of the oven and the hob. In addition, the user needs to buy two different food probes which results in increased costs.

The food probe arrangement comprising the first and second temperature probes can be used selectively in the oven and on the hob. For example, the first temperature probe may be used for measuring a core temperature of a food cooked in the oven or on the hob and the second temperature probe may be used for measuring a temperature of a cooking medium on the hob. In particular, the second temperature probe may be used for measuring the temperature of oil for frying food or for sous vide or boiling on the hob. The second temperature probe may alternatively be used for also measuring a core temperature of a food.

Thus, the food probe arrangement has an improved versatility and it is not necessary to use two separate temperature probes each with its own electronic (such as a control module, an energy storage element, and a transmission element) for a cooking program in the oven and on the hob. Thus, the usability of the food probe arrangement is improved for the user.

Further, the integration of the food probe arrangement into the ecosystem of the oven and hob is facilitated compared to several different food probes. For example, the same existing wireless communication channel may be used for the food probe arrangement when being used in the oven and on the hob for controlling an ongoing cooking process. In contrast, when using two different probe, it may be required to close an existing wireless communication channel with the first probe and to establish a new wireless communication channel with the second probe when transferring food between an oven and a hob.

The first and second temperature probes may have different dimensions such as different lengths and/or diameters. For example, the length of the first temperature probe along its main extension axis may be shorter than the length of the second temperature probe along its main extension axis. Alternatively or additionally, the first temperature probe may have a smaller diameter (e.g. an average diameter along the main extension axis) than the second temperature probe.

Each of the first and/or second elongate element may be formed as a sleeve or pipe, for example a stainless steel sleeve or pipe, in which the respective temperature sensor is arranged, respectively.

Preferably, the first and/or second elongate elements comprise a tip arranged at the first end portion, respectively. The tip may simplify the insertion of the temperature probe into a food.

The first and/or second temperature probe is preferably configured to be positioned in thermal contact with food, respectively. Thus, the temperature of the food may be measured directly.

The first and/or second temperature signal may be indicative of a temperature of the surface of the food. Preferably, the temperature signal may be indicative of a temperature of an inner or core temperature of the food, for example if the temperature sensor is inserted into the food.

Herein the temperature probe can also be denoted as food probe or food thermometer.

Preferably, the first temperature probe comprises: a control module arranged within the first elongate element and being configured to receive the first and second temperature signals from the first and second temperature sensors. Alternatively or additionally, the first temperature probe comprises an electrical energy storage element arranged within the first elongate element. Preferably, the second temperature probe does not comprise a control module and an energy storage element. More preferably, the second temperature probe only comprises an electrical connection from the second temperature sensor to the first temperature probe and in particular to the control module of the first temperature probe.

When the first temperature probe is inserted into a food cooked e.g. in the oven for measuring a core temperature of the food, the control module and the energy storage element being temperature-sensitive components are protected from high temperatures within the oven.

'Temperature-sensitive components' may be components which will be damaged when exposed, in particular for a longer period, to a temperature higher than e.g. 60°C, 70°C, 85°C or 105°C.

It may be considered that the food is ready at a core temperature of less than 85°C so that the temperature probe inside the food does not exceed said temperature during a cooking process even if the temperature surrounding the food, such as the oven temperature, is higher than 85°C.

By providing the control module and the energy storage element only or exclusively in the first temperature probe and not in the second temperature probe, the second temperature probe is preferably resistant to a higher temperature compared to the first temperature probe (e.g. a temperature higher than 85°C). E.g. the second temperature probe is in thermal contact with a cooking medium having a temperature of more than 85°C, 100°C, 130° or more than 150°C. For example, the second temperature probe may be used for measuring a temperature of oil (intended for deep-frying) in a pot on the hob. Thus, the temperature range that can be measured with the food probe arrangement is extended by the provision of the first and second temperature probes.

The first temperature probe may comprise a marker on the outer surface of the first elongate element indicating to a user a minimum penetration depth of the first temperature probe. The minimum penetration depth may be a depth to which the first elongate element of the first temperature probe is to be inserted into the food. Preferably the first temperature probe is adapted to be inserted into the food from the tip at the first end portion up to the marker. Preferably then the control module and/or the energy storage element are completely received in the food.

The marker is preferably arranged between the second end portion of the first elongate element and the control module and/or the energy storage element. Preferably the transmission module is arranged beyond the marker at the side of the second end portion, for example in a or the housing. Thereby wireless transmission of signals from the transmission module is improved when not being surrounded by food. In an embodiment the transmission module may also be arranged between the first end portion of the first elongate element and the marker.

In an embodiment the control module and/or the energy storage element (and/or the transmission module) are arranged in a middle region of the first elongate element between the first end portion and the second end portion.

By inserting the first temperature probe up to the marker and/or up to the second end portion into a food, it may be ensured that the control module and/or the energy storage element of the first temperature probe are positioned within the food when the first temperature probe is used for measuring a core temperature of the food. Thus, the control module and the energy storage element are protected from high temperatures during the cooking process.

Preferably, the energy storage element is a battery or a supercapacitor which is, preferably wirelessly, rechargeable. As compared to a rechargeable battery a supercapacitor (having e.g. the same capacity) is cheaper, has less weight and/or volume, has a higher power density, can be faster recharged, has less degradation over time (i.e. has a longer life cycle) and may have lower internal power losses (better efficiency).

The energy storage element may be configured to provide electrical energy to the first and/or second temperature probes, and in particular to the control module and/or a or the transmission module (see below) arranged in the first temperature probe.

Preferably, the control module is adapted to convert the first and/or second temperature signal into a radio signal compatible to be wirelessly transmitted, wherein the first or second temperature probe comprises the transmission module arranged at the second end portion of the first or second elongate element. The transmission module may be configured to receive the radio signal and to transmit wirelessly the radio signal to a food preparation device or to a mobile device configured for communicating with a food preparation device.

Preferably the transmission module is an antenna element, in particular a passive antenna element. Preferably the transmission module and in particular the housing in which the transmission module is housed, is designed to be temperature-resistant up to a temperature of at least 150°C, 180°C, 200°C, 220°, 240°C or 260°C.

The control module may be adapted to convert both, the first and second temperature signals or only one of the first and second temperature signals into a radio signal or into two different radio signals (a first radio signal indicative of the first temperature signal and a second radio signal indicative of the second temperature signal) and to transmit the radio signal(s) to the transmission module. Preferably the control module also transmits an indication signal indicating whether the transmitted temperature signal is the first and/or second temperature signal.

Preferably, the control module is adapted to convert the temperature signal of the first and second temperature signal which indicates the higher temperature, into the radio signal and to transmit said radio signal to the transmission module. The transmission module may be configured to transmit said radio signal to the food preparation device or the mobile device.

The transmission module is preferably configured to transmit the radio signal(s) wirelessly by using a Radio Frequency (RF) connection such as Bluetooth^{®} or WiFi or by an optical connection such as infrared.

The food preparation apparatus may for example be an appliance with heating function, more specifically a cooking hob, an oven, an induction heater or the like. By providing the radio signal(s), the control of an ongoing cooking process may be improved. In particular, the transmission module is configured to transmit the radio signal to a control unit of the food preparation apparatus for controlling a cooking process.

Preferably, in a permanently or detachably connected state of the first and second temperature probes of the food probe arrangement, a longitudinal main extension axis of the first elongate element of the first temperature probe is linearly aligned with a longitudinal main extension axis of the second elongate element of the second temperature probe and wherein the second end portions are arranged side by side while the first end portions form the outer portions of the permanently or detachably connected temperature probes.

Preferably, the food probe arrangement comprises a housing removably or permanently arranged around a section of the food probe arrangement such that the second end portions of the first and second elongate elements and preferably the transmission module are arranged within the housing (e.g. in case the first temperature probe is permanently mechanically connected to the second temperature probe). The housing is preferably designed to be temperature-resistant up to a temperature of at least 150°C, 180°C, 200°C, 220°, 240°C or 260°C. The housing may be manufactured from a plastic or silicone material.

More preferably, the housing comprises or forms a holding element for holding the food probe arrangement at an edge of a pot or pan such that the second temperature probe is in thermal contact with a cooking medium in the pot or pan and the first temperature probe does not come into contact with a cooking medium within the pot or pan. The holding element may be formed as a hook element.

The holding element may facilitate the handling and use of the food probe arrangement. The holding element may ensure a fixed position of the food probe arrangement at the pan or pot. Thus the first temperature probe and its electronics (control module, energy storage element) may be kept at a distance from the cooking medium. Thus, it can be ensured that the electronics of the first temperature probe do not overheat and get damaged.

Preferably, the food probe arrangement comprises a first sleeve element configured to be slid at least partially onto the first temperature probe to encapsulate the first temperature probe, and/or a second sleeve element configured to be slid at least partially onto the second temperature probe to encapsulate the second temperature probe. The sleeve elements may improve the handling of the food probe arrangement for the user. Preferably, the first sleeve and/or the second sleeve is configured to cover a tip at the first end portion of the elongate element, respectively. This may prevent the user from being injured by said tips.

Preferably the second sleeve element comprises a recess which is configured such that, in a mounted state of the second sleeve element on the second temperature probe, the second temperature sensor is arranged within or at the recess such that the second temperature sensor is exposed to the environment for measuring the second temperature signal (i.e. the temperature sensor is not covered by the second sleeve element).

By providing the recess in the second sleeve element, it may be ensured that the second temperature sensor can still measure the temperature reliably even if the sleeve is mounted on the second temperature probe (second elongate element). In particular, when the food probe arrangement is used in an oven with the first temperature probe being inserted into a food to measure a core temperature of the food, the second temperature sensor of the second temperature probe being connected to the first temperature probe may measure a temperature within the oven (while the second sleeve element is mounted on the second temperature probe).

The first and/or second sleeve element may be made from a material which is temperature-resistant up to a temperature of at least 100°C, 150°C, 180°C, 200°C, 220°, 240°C or 260°C. For example, the first and/or second sleeve element is made from silicone or plastic.

Preferably, in case the first temperature probe is detachably mechanically connected to the second temperature probe, the first temperature probe comprises a first electrical coupling element arranged at the second end portion of the first elongate element, and the second temperature probe comprises a second electrical coupling element arranged at the second end portion of the second elongate element, wherein the first electrical coupling element is detachably connected to the second electrical coupling element.

Preferably the first electrical coupling element comprises a first positional configuration of electrical contacts and the second electrical coupling element comprises a second positional configuration of electrical contacts, wherein the positional configurations of electrical contacts of the first and second electrical coupling elements are mating to each other.

By providing the electrical coupling elements, it is possible to separate the first temperature probe from the second temperature probe and thus both temperature probes can be used separately.

For example, the first temperature probe (which preferably comprises the control module and/or energy storage element and optionally the transmission module arranged at the second end portion of the first temperature probe) may be used for measuring a core temperature of a food e.g. in the oven or on the hob.

For example, the second temperature probe may be used for measuring a temperature of a cooking medium in a pan or pot on the hob. Preferably, the second temperature probe detached from the first temperature probe is configured to be connected to a handle comprising a control module and a transmission module. The handle improves the handling of the detached second temperature for the user.

In another example, the first and second temperature probes may be connected to each other and the first temperature probe may be used in the oven or on the hob for measuring a core temperature of a food or the second temperature probe is used on the hob for measuring a temperature of a cooking medium.

The first temperature probe and the second temperature probe detached from each other may be used simultaneously, for example the first temperature probe for temperature measurements in the oven and the second temperature probe for measurement on the hob.

In another example, the first and second temperature probes may be connected to each other and the first temperature probe is used in the oven for measuring a core temperature of a food and the second temperature probe is used for measuring a temperature within the oven. Using the second temperature sensor for measuring the temperature within the oven may improve the temperature measurement in connection with a built-in cavity temperature sensor of an oven. This can also be advantageous if the temperature sensor of the oven is damaged or does not work properly.

When an oven divider is used in the oven which separates the oven cavity into two separate cavities, i.e. an upper and lower cavity, having different temperatures, the built-in cavity temperature sensor of the oven may be used for measuring the temperature within the upper cavity. The first temperature probe can be inserted into a food in the lower cavity for measuring a core temperature of the food and the second temperature probe connected to the first temperature probe may be used for measuring the temperature within the lower oven cavity.

Preferably, the food probe arrangement comprises a first housing removably or permanently arranged around the second end portion of the first elongate element, wherein the first electrical coupling element and preferably the transmission module is arranged within, at or integrated in the first housing, and/or a second housing removably or permanently arranged around the second end portion of the second elongate element, wherein the second electrical coupling element is arranged within, at or integrated in the second housing. The first and/or second housing is preferably designed to be temperature-resistant up to a temperature of at least 150°C, 180°C, 200°C, 220°, 240°C or 260°C. The first and/or second housing may be manufactured from a plastic or silicone material.

The first and/or second housing may be separate elements which are permanently or removably arranged at the respective second end portions of the elongate elements. Alternatively, the first and/or second housings may be formed by the respective elongate element.

Preferably, the first and second electrical coupling elements each comprise electrical contacts such as a pogo pins which are configured to be connected to each other.

Preferably, when the first temperature probe is detached from the second temperature probe, the first electrical coupling element is configured to be electrically connectable to an electrical connection line, and wherein the first temperature sensor is configured to provide the first temperature signal to a control module connected to the electrical connection line. Preferably, the control module is a control module of a food preparation apparatus or a control module being separate from the food preparation apparatus.

Additionally or alternatively, when the first temperature probe is detached from the second temperature probe, the second electrical coupling element is configured to be electrically connectable to a handle for handling the second temperature probe, and wherein the second temperature sensor is configured to provide the second temperature signal to a control module of the handle which preferably communicates with a transmission module of the handle.

Preferably, the handle comprises the control module configured to receive the second temperature signal from the temperature sensor and to convert the second temperature signal into a radio signal compatible to be wirelessly transmitted, and the transmission module configured to receive the radio signal from the control module and to transmit the radio signal to a food preparation device.

Thus, the second temperature probe (which preferably does not comprise temperature-sensitive components such as a control module and/or an energy storage element) can be positioned in thermal contact with a cooking medium in a pan or pot on the hob while the temperature-sensitive electronic elements (control module, energy storage element) are arranged within the handle (and not in the second temperature probe). The handle is preferably distanced from the cooking medium. Further, if a wireless transmission is not possible, the first temperature signal from the first temperature sensor may be transmitted via the electrical connection line.

Preferably, the first positional configuration of electrical contacts of the first electrical coupling element is configured to be electrically connected to the connection line and the connection line comprises a positional configuration of electrical contacts configured to be connected to the electrical contacts of the first electrical coupling element of the first temperature probe, wherein the positional configurations of electrical contacts of the first temperature probe and the electrical connection line are mating to each other.

Preferably, the second positional configuration of electrical contacts of the second electrical coupling element is configured to be electrically connected to the handle and the handle comprises a positional configuration of electrical contacts configured to be connected to the electrical contacts of the second electrical coupling element of the second temperature probe, wherein the positional configurations of electrical contacts of the first temperature probe and the electrical connection line are mating to each other.

According to an aspect of the invention, a food probe arrangement is provided. The food probe arrangement comprises a first part having a first elongate element having a first end portion and a second end portion opposite to the first end portion; and a second part being a temperature probe having: a second elongate element having a first end portion and a second end portion opposite to the first end portion, and a temperature sensor arranged at the first end portion of the second elongate element, wherein the temperature sensor is configured to provide a temperature signal. The food probe arrangement further comprises a connection element pivotably connecting the second end portion of the first elongate element to the second end portion of the second elongate element, and/or the second elongate element has a receptacle and is configured to at least partially receive the first elongate element within the receptacle.

By providing a food probe arrangement which is foldable or pivotable or with the receptacle for receiving at least partially the second elongate element, the food probe arrangement needs less space in a collapsed/folded state. In particular, the longitudinal length is reduced in the folded/collapsed state. This may be advantageous when using the food probe arrangement in the oven where available space is limited and also for stowing the food probe arrangement when the user does not use it.

Preferably, the temperature probe is a second temperature probe and the temperature sensor is a second temperature sensor configured to provide a second temperature signal, and wherein the first part is or comprises a first temperature probe having a first temperature sensor arranged at the first end portion of the first elongate element and being configured to (be positioned in thermal contact with food and) to provide a first temperature signal.

The first temperature probe may be used for measuring a core temperature of a food in the oven or on the hob. Electronic such as a control module and an energy storage element arranged within the first temperature probe are protected from high temperatures, e.g. temperature higher than 85°C or 105°C, when being inserted into a food.

The second temperature probe may be used for measuring a temperature of a cooking medium on a hob or a core temperature of a food in the oven or on the hob.

The folded/collapsed state of the temperature probe arrangement may be used for measuring the core temperature of a food in the oven, wherein the first and second temperature probes are inserted into the food. Thus, the core temperature can be measured by two temperature sensors so that the core temperature measurement is improved. This may lead to a better temperature control of the cooking process and thus to a better cooking result for the user.

Due to the electrical connection between the first and second temperature probes, the same wireless communication channel can be used when measuring with the first and second temperature sensors.

Preferably, the first part or the first temperature probe comprises a control module configured to receive the first temperature signal from the first temperature sensor and optionally the second temperature signal from the second temperature sensor and/or an electrical energy storage element arranged within the first elongate element. Preferably, the second temperature probe does not comprise a control module and/or an energy storage element.

Thus, when using the food probe arrangement in a folded/collapsed state for measuring a core temperature of a food (for example in the oven or on the hob), the control module and energy storage element are protected from high temperatures. The pivoted/extended state of the food probe arrangement may be used for measuring a temperature of a cooking medium on a hob with the second temperature sensor while the first elongate element and its electronic components are distanced from the cooking medium and thus protected from high temperatures.

Preferably, the control module is adapted to convert the first and/or second temperature signal into a radio signal compatible to be wirelessly transmitted, wherein the temperature probe or the second part or the second temperature probe comprises a transmission module arranged at the second end portion of the first or second elongate element, and wherein the transmission module is configured to receive the radio signal and to transmit wirelessly the radio signal to a food preparation device or to a mobile device configured for communicating with a food preparation device.

Preferably, the transmission module is arranged at or adjacent to the connection element such that in a fully collapsed or inserted state of the food probe arrangement, the transmission module is positioned at or adjacent to the second end portion of the second elongate element.

Preferably, the transmission module is arranged between the connection element and the control module/energy storage element. Preferably, the transmission module is arranged such that when the food probe arrangement is in a collapsed/folded or inserted state and is inserted into a food, the transmission module is positioned outside of the food such that the signals can be transmitted by the transmission module.

'Fully collapsed/folded state' may be a state in which the first and second elongate elements enclose an angle of 0 degrees or substantially 0 degrees between each other and/or in which the first and second elongate elements are in contact with each other. In the fully collapsed/folded state, the main extension axis of the first and second elongate elements are preferably parallel to each other. A fully collapsed state may be when the first elongate element is pivoted by an angle of 180° with respect to the second elongate element. When the first elongate element is pivoted with respect to the second elongate element, the food probe arrangement is in a 'pivoted state'.

'Fully inserted state' may be a state in which the first elongate element is maximally inserted into the receptacle. In this state, the transmission module is preferably positioned outside the receptacle so that a reliable transmission of the radio signal can be ensured. When the first elongate element is moved within the receptacle such that the second end portion of the first elongate element moves away from the (second) temperature probe, the food probe arrangement is in an 'extended state'.

Preferably, the first elongate element is pivotably connected to the second elongate element, and the second elongate element comprises a recess which is configured such that in a fully collapsed or folded state of the first elongate element, the first elongate element is at least partially accommodated in the recess of the second elongate element.

Alternatively, the second elongate element may have a main extension axis and the first elongate element is received in the receptacle in such a way that the first elongate element is at least partially insertable into the receptacle along the main extension axis of the second elongate element.

Preferably, the control module and the energy storage element are arranged in the recess or the receptacle in a fully collapsed or inserted state of the food probe arrangement.

Thus, in the fully collapsed or inserted state the insertion of the first and second temperature probes is simplified for the user. In particular, the diameter of the area of the (second) temperature probe that is inserted into the food preferably does not increase, or does not increase significantly by the first part or first temperature probe in the collapsed state.

When the food probe arrangement is in the collapsed or inserted state and is inserted into a food, the first and second elongate elements are preferably insertable into the food so that temperature-sensitive components such as the control module and the energy storage element of the second temperature probe are protected by the food from high temperatures.

The collapsed/folded or fully inserted state may be used when using the food probe arrangement for measuring a core temperature of a food in the oven or on the hob with the (second) temperature sensor and optionally the first temperature sensor.

A pivoted state of the food probe arrangement (i.e. the first part or first temperature probe is pivoted with respect to the second temperature probe) or an extended state of the food probe arrangement may be used for measuring with the (second) temperature sensor a cooking medium temperature in a pan or pot.

In the fully collapsed or inserted state, the total length of the food probe arrangement may be smaller than in a pivoted or extended state.

A spiky tip at the second end portion of the first elongate element may be positioned within the recess or receptacle of the second elongate element in a fully collapsed or inserted state of the food probe arrangement so that the user is protected from being injured by the spiky tip. This improves the handling for the user.

Preferably the connection element is or comprises a hinge pivotably connecting the first and second elongate elements. The transmission module may be arranged adjacent to the hinge at the side of the first or second elongate element.

Preferably, an electrical connection extends from the (second) temperature probe through the connection element, e.g. the hinge, to the first part of the first temperature probe. Preferably, the electrical connection extends from the (second) temperature sensor through the connection element to the control module of the first part or of the first temperature probe.

Preferably, wherein the first elongate element is pivotable or extendable with respect to the second elongate element of the (second)temperature probe to such an extent that, when measuring a temperature of a cooking medium in a pan or pot on a hob with the (second) temperature sensor, the first elongate element does not come into contact with a cooking medium

The first elongate element may comprise a holding element for hanging the food probe arrangement at an edge of the pan or pot on the hob. Alternatively, the first elongate element pivoted with respect to the second elongate element may act as the holding element.

Preferably, the food probe arrangement comprises a sleeve element configured to be slid, in a fully extended or pivoted state, at least partially onto the first elongate element of the second temperature probe to encapsulate the first elongate part.

Preferably in a mounted state, the sleeve element encapsulates at least partially the first part or first temperature probe and the connection element. The sleeve element may be made from silicone and/or may be temperature-resistant up to a temperature of at least 150°C, 180°C, 200°C, 220°, 240°C or 260°C. The sleeve element may improve the handling for the user and may prevent the user from being injured by a sharp tip at the first end portion of the second part.

The sleeve element may comprise a recess which is configured such that when the sleeve element is mounted to the first temperature probe, the first temperature sensor is exposed to the environment and is not covered by the sleeve element. Thus, the food probe arrangement with the sleeve can be used in the oven for measuring a core temperature of a food with the second temperature sensor, while using the first temperature sensor as an additional oven cavity sensor or as a sensor for measuring the temperature of a lower oven cavity when the oven divider is used.

According to an aspect of the invention, a temperature probe is provided. The temperature probe has an elongate element having a first end portion and a second end portion opposite to the first end portion, a temperature sensor arranged at the first end portion and configured to provide a temperature signal, and an electrical coupling element arranged at the second end portion. The electrical coupling element is selectively electrically and mechanically connectable to a handle and to an electrical connection line. The temperature sensor is preferably configured to provide the temperature signal via the electrical coupling element to a control module of the handle or to a control module of a food preparation apparatus.

Preferably, the temperature probe does not comprise any electronic such as a control module, an energy storage element or a transmission module, but only an electrical connection between the electrical coupling element and the temperature sensor.

The temperature probe may comprise a housing arranged at the second end portion, wherein the electrical coupling element is arranged within, at or integrated in the housing. The housing is preferably designed to be temperature-resistant to a temperature of at least 150°C, 180°C, 200°C, 220°, 240°C or 260°C.

According to an aspect of the invention, a food probe kit is provided which comprises a temperature probe as described herein and in particular as described in the preceding paragraphs. The food probe kit further has a handle comprising a control module and a transmission module configured for wireless signal transmission to a control module of a food preparation device or to a mobile device configured for communicating with a food preparation device; and/or the food probe kit has an electrical connection line being configured to provide an electrical connection between the electrical coupling element and a control module, preferably of a food preparation device, or to a mobile device configured for communicating with a food preparation device.

Preferably the electrical coupling element comprises a positional configuration of electrical contacts configured to be electrically connected to the handle and/or connection line and the connection line and/or the handle each comprises a positional configuration of electrical contacts configured to be connected to the electrical contacts of the electrical coupling element of the temperature probe, wherein the positional configurations of electrical contacts of the temperature probe and the handle and/or electrical connection line are mating to each other.

It is to be understood that the features mentioned above and those yet to be explained below can be used not only in the respective combinations indicated, but also in other combinations or in isolation. In particular, the features of the different aspects, embodiments and examples can be combined with each other unless noted to the contrary.

Any feature disclosed herein (for the above embodiments and/or configurations and from the below described detailed embodiments and modifications) can be combined with the claimed subject individually or in any sub-combination. If herein the conjunction "and/or" is used all logical elements and combinations are individually disclosed. E.g. a, b and/or c discloses the elements/combinations a, b, c, ab, ac, bc as well as abc.

### BRIEF DESCRIPTION OF THE DRAWINGS

Reference is made in detail to preferred embodiments of the invention, examples of which are illustrated in the accompanying figures.
- Fig. 1: is a schematic drawing showing a perspective view of a first food probe arrangement.
- Fig. 2: is a schematic drawing showing a perspective view of the food probe arrangement of Fig. 1 in a detached state.
- Fig. 3: is a schematic drawing showing a perspective view of a second food probe arrangement.
- Fig. 4: is a schematic drawing showing another perspective view of the second food probe arrangement of Fig. 3.
- Fig. 5: is a schematic drawing showing a perspective view of the second food probe arrangement of Fig. 3 with a first sleeve element.
- Fig. 6: is a schematic drawing showing a perspective view of the second food probe arrangement of Fig. 3 with a second sleeve element.
- Fig. 7: is a schematic drawing showing a perspective view of a third food probe arrangement.
- Fig. 8: is a schematic drawing showing a perspective view of the third food probe arrangement of Fig. 7 in a pivoted state.
- Fig. 9: is a schematic drawing showing a perspective view of the third food probe arrangement of Fig. 7 in a fully pivoted state.
- Fig. 10: is a schematic drawing showing a perspective view of a food probe kit.
- Fig. 11: is a schematic drawing showing a perspective view of a temperature probe connected to a handle.
- Fig. 12: is a schematic drawing showing a perspective view of a temperature probe connected to an electrical connection line.

### DETAILED DESCRIPTION OF THE DRAWINGS

In the following figures examples for food thermometer arrangements, food preparation arrangements, food preparation control arrangements and methods of operation thereof are shown and described in further detail. In the drawings, like reference numerals refer to like elements.

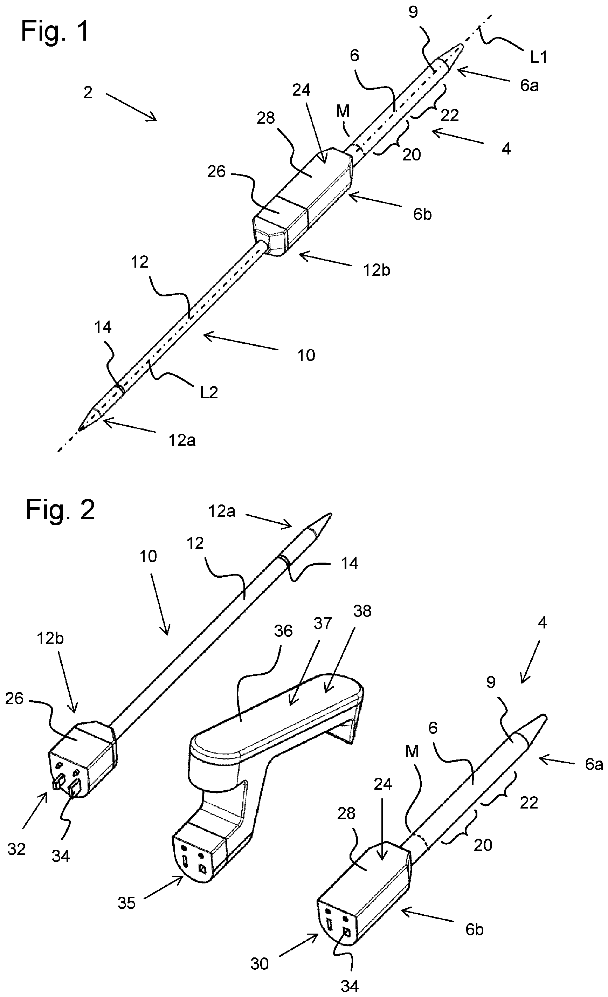

Fig. 1 is a schematic drawing showing a perspective view of a first food probe arrangement 2. The food probe arrangement 2 comprises a first temperature probe 4 and a second temperature probe 10. The first temperature probe 4 has a first elongate element 6 having a first end portion 6a and a second end portion 6b opposite to the first end portion 6a. The first temperature probe 4 further comprises a first temperature sensor 9 arranged at the first end portion 6a of the first elongate element 6 and being configured to provide a first temperature signal. The second temperature probe 10 has a second elongate element 12 having a first end portion 12a and a second end portion 12b opposite to the first end portion 12a. The second temperature probe 10 further comprises a second temperature sensor 14 arranged at the first end portion 12a of the second elongate element 12 and being configured to provide a second temperature signal. The second end portion 6b of the first elongate element 6 is detachably electrically connected to the second end portion 12b of the second elongate element 12. Thus, the first temperature probe 4 can be detached from the second temperature probe 10. The first temperature probe 4 may be used for detecting a core temperature of a food and the second temperature probe 10 may be used for measuring a temperature of a cooking medium in a pot on a hob.

At least one of the first end portions 6a, 12a, preferably both first end portions 6a, 12a, may comprise or may be formed as a tip configured for insertion into a food.

The first and/or second elongate elements 6, 12 may be formed as a hollow sleeve, e.g. made of stainless steel. The temperature sensor 9, 14 may be arranged within the respective elongate element 6, 12.

The first temperature probe 4 may comprise a control module 20 arranged within the first elongate element 6a and being configured to receive the first and second temperature signals from the first and second temperature sensors 9, 14, and/or an electrical energy storage element 22 arranged within the first elongate element 6. The control module 22 may be adapted to convert the first and/or second temperature signal into a radio signal compatible to be wirelessly transmitted.

The first temperature probe 4 may comprise a marker M on the outer surface of the first elongate element 6a indicating to a user a minimum penetration depth of the first temperature probe. The minimum penetration depth may be a depth to which the first elongate element of the first temperature probe is to be inserted into the food. The marker M is preferably arranged between the second end portion 6b of the first elongate element 4 and the control module 20 and/or the energy storage element 22. Preferably this is generally applicable to all lower temperature resistant first temperature probes 4, 5 herein where the first temperature probe 4, 5 has a lower temperature resistance as compared to the second temperature probes 10, 11. The temperature sensitive elements control module 20 and/or energy storage element 22 are arranged within the first temperature probe 4, 5.

Preferably, the second temperature probe 10 (or 11) does not comprise a control module and an energy storage element. Thus, the second temperature probe 10 (or 11) is preferably temperature resistant to higher temperatures compared to the first temperature probe 4 (or 5) so that the second temperature probe 10 (or 11) may be used for measuring a temperature of a cooking medium in a pot on a hob, e.g. of oil for frying food.

Preferably, the first or second temperature probe 4, 10 comprises a transmission module 24 arranged at the second end portion 6b, 12b of the first or second elongate element 6, 12. The transmission module 24 may be configured to receive the radio signal from the control module 20 and to transmit wirelessly the radio signal to a food preparation device or to a mobile device configured for communicating with a food preparation device. As shown in Fig. 1, the transmission module 24 may be arranged at the second end portion 6b of the first temperature probe 4.

In a detachably connected state of the first and second temperature probes 4, 10, a longitudinal main extension axis L1 of the first elongate element 6 of the first temperature probe 4 may be linearly aligned with a longitudinal main extension axis L2 of the second elongate element 12 of the second temperature probe 10, wherein the second end portions 6b, 12b are arranged side by side while the first end portions 6a, 6b form the outer portions of the connected temperature probes 4, 10.

Fig. 2 is a schematic drawing showing a perspective view of the food probe arrangement 2 of Fig. 1 in a detached state of the first and second temperature probes 4, 10. As shown in Fig. 2, the first temperature probe 4 may be detachably mechanically connected to the second temperature probe 10. Preferably, the first temperature probe 4 comprises a first electrical coupling element 30 arranged at the second end portion 6b of the first elongate element 6, and the second temperature probe 10 may comprise a second electrical coupling element 32 arranged at the second end portion 12b of the second elongate element 12. The first and/or second electrical coupling 30, 32 may comprise electrical contacts 34 such as pogo pins which are mating each other. As shown in Figs. 1 and 2, the first electrical coupling element 30 may be detachably connectable to the second electrical coupling element 32.

Preferably, in a detached state of the temperature probes 4, 10, the first temperature probe 4 may be used for detecting a core temperature of a food and/or the second temperature probe 10 may be used for measuring a temperature of a cooking medium in a pot on a hob. Thus, both temperature probes 4, 10 may be used simultaneously for measuring temperatures of food/cooking medium. The first temperature probe 4 may be inserted into a food, whereas the transmission module 24 is positioned external to the food so that radio signals can be transmitted unattenuated by surrounding food.

As shown in Figs. 1 and 2, the food probe arrangement 2 may comprise a first housing 26 removably or permanently arranged around the second end portion 6b of the first elongate element 6, wherein the first electrical coupling element 30 is arranged within, at or integrated in the first housing 26, and a second housing 28 removably or permanently arranged around the second end portion 12b of the second elongate element 12, wherein the second electrical coupling element 32 is arranged within, at or integrated in the second housing 28. Preferably, the transmission module 24 is also arranged within, at or integrated in the first housing 26 of the first temperature probe 4.

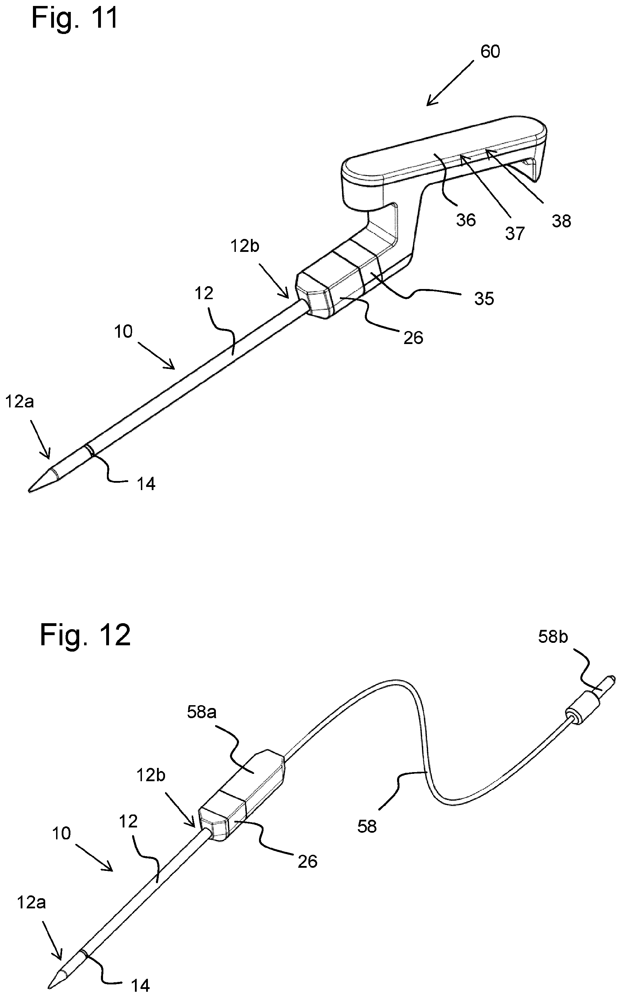

Preferably, the first electrical coupling element 30 of the first temperature probe 4 is configured to be electrically connectable to an electrical connection line 58 (cf. Fig. 12), wherein the first temperature sensor 9 is configured to provide the first temperature signal to a control module connected to the electrical connection line 58. The first temperature probe 4 preferably comprises the transmission module 24 for wireless transmission of radio signals to a control module, preferably a control module of a food preparation apparatus. However, if a wireless transmission is not possible, the user may connect the first temperature probe 4 to the electrical connection line 58 so that the signals can be transmitted via wire.

Preferably, the second electrical coupling element 32 is configured to be electrically connectable to a handle 36, preferably to an electrical coupling element 35 of the handle 36 (see Fig. 2) for handling the second temperature probe (Fig. 11 shows the second temperature probe 10 being connected to the handle 36). The second temperature sensor 14 may be configured to provide the second temperature signal to a control module 37 of the handle 36 which preferably communicates with a transmission module 38 of the handle. The control module 37 and/or the transmission module 38 of the handle 36 are preferably arranged within a housing of the handle 36. The second temperature probe 10 being connected to the handle 36 may be positioned at an edge of a pot or pan such that the second temperature probe 10 comes in contact with a cooking medium in the pot or pan for measuring its temperature.

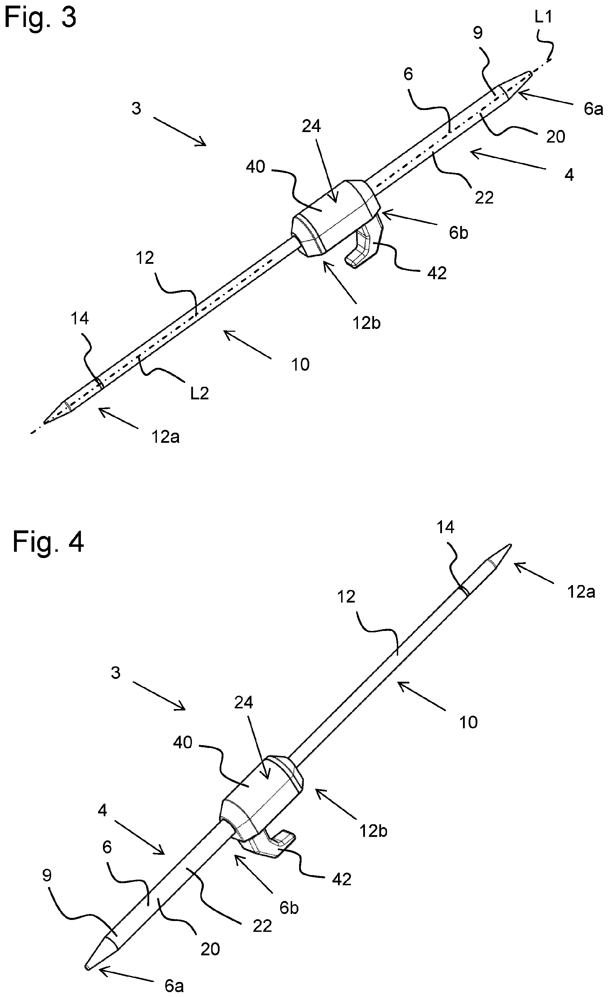

Fig. 3 is a schematic drawing showing a perspective view of a second food probe arrangement 3 and Fig. 4 is a schematic drawing showing another perspective view of the second food probe arrangement 3 of Fig. 3. The second food probe arrangement 3 shown in Figs. 3 to 6 is very similar to the first food probe arrangement 2 shown in Figs. 1 and 2 and only the differences are described in the following. All other features described with respect to Figs. 1 and 2 also apply to the food probe arrangement 3 shown in Figs. 3 to 6.

Compared to the food probe arrangement 2 shown in Figs. 1 and 2 in which the first and second temperature probes 4, 10 are detachably connected to each other, in the food probe arrangement 3 shown in Fig. 3, the second end portion 6b of the first elongate element 6 is permanently electrically connected to the second end portion 12b of the second elongate element 12.

The food probe arrangement 3 may comprise a housing 40 removably or permanently arranged around a section of the food probe arrangement 3 such that the second end portions 6b, 12b of the first and second elongate elements 6, 12 are arranged within the housing 40. The transmission module 24 may be arranged within the housing 40. Preferably, the housing 40 comprises or forms a holding element 42 for holding the food probe arrangement 3 at an edge of a pot or pan such that the second temperature probe 10 is in thermal contact with a cooking medium in the pot or pan and the first temperature probe 4 does not come into contact with a cooking medium within the pot or pan.

The food probe arrangement 3 may comprise a first and/or second sleeve element 44, 46. The sleeve elements may improve the handling of the food probe arrangement 3 and may prevent the user from being hurt by the first end portions (e.g. formed as tips) of the temperature probes 4, 10.

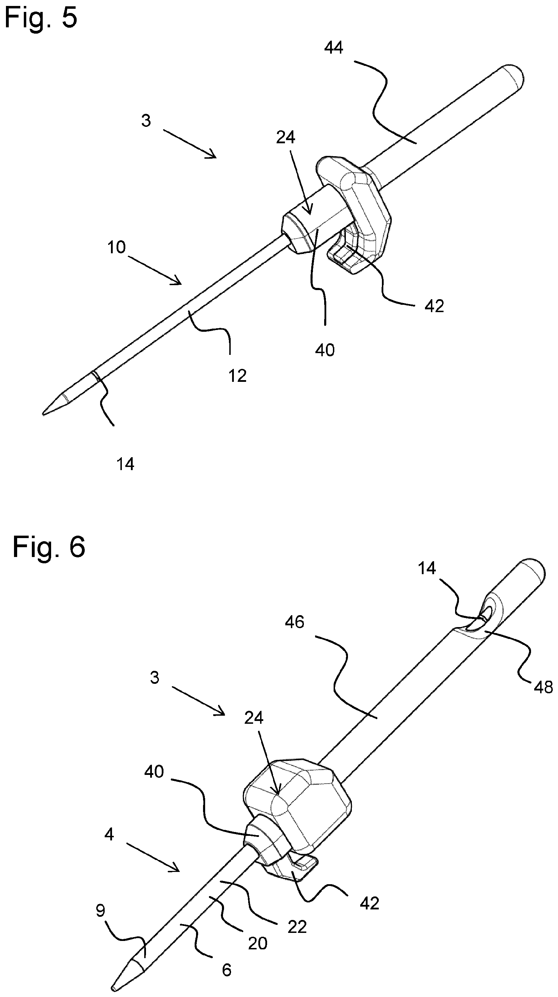

As shown in Fig. 5, the first sleeve element 44 may be configured to be slid at least partially onto the first temperature probe 4 or the first elongate element 6 to encapsulate the first temperature probe 4. Fig. 5 shows a state in which the first sleeve element 44 is slid onto the first temperature probe 4.

As shown in Fig. 6, the second sleeve element 46 may be configured to be slid at least partially onto the second temperature probe 10 or on the second elongate element 12 to encapsulate the second temperature probe 10. Fig. 6 shows a state in which the second sleeve element 46 is slid onto the first temperature probe 4.

As shown in Fig. 6, the second sleeve element 46 may comprise a recess 48 which is configured such that, in a mounted state of the second sleeve element 46 on the second temperature probe 10, the second temperature sensor 14 is arranged within or at the recess 48 and is exposed to the environment for measuring the second temperature signal. For example, the food probe arrangement 3 may be inserted into a food with the first temperature probe 4 for measuring a core temperature of the food within an oven, whereas the second temperature probe 10 is used for measuring the oven cavity temperature. Thus, the second temperature sensor 14 may be used as an additional cavity sensor within the oven for improving the temperature measurement resulting in a better cooking result. Alternatively, an oven divider may be used in the oven for separating the oven into a lower oven cavity and an upper oven cavity. In this case, the built-in temperature sensor of the oven may be used for measuring the temperature within the upper oven cavity whereas the second temperature sensor 14 of the temperature probe 10 may be used for measuring the temperature of the lower oven cavity.

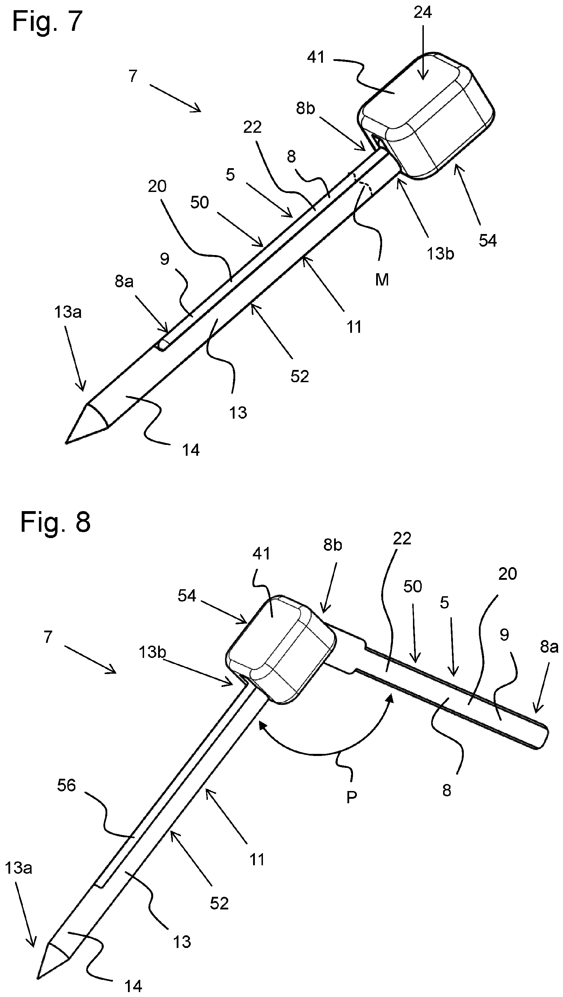

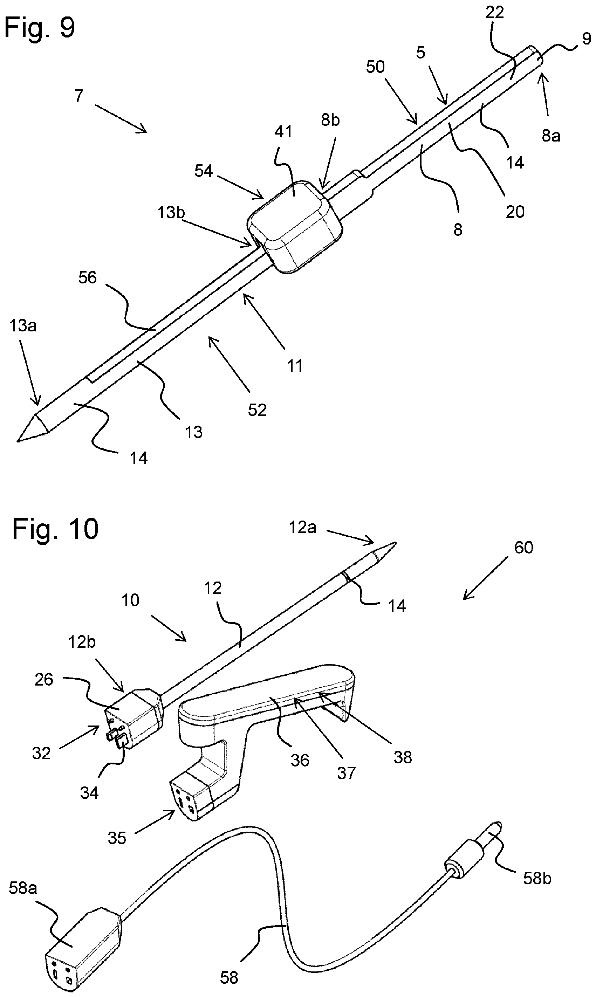

Fig. 7 is a schematic drawing showing a perspective view of a third food probe arrangement 7, Fig. 8 is a schematic drawing showing a perspective view of the third food probe arrangement 7 of Fig. 7 in a pivoted state, and Fig. 9 is a schematic drawing showing a perspective view of the third food probe arrangement 7 of Fig. 7 in a fully pivoted state.

The food probe arrangement 7 comprises a first part 50 having a first elongate element 8 having a first end portion 8a and a second end portion 8b opposite to the first end portion 8a. The food probe arrangement 7 further comprises a second part 52 being a temperature probe 11 having: a second elongate element 13 having a first end portion 13a and a second end portion 13b opposite to the first end portion 13a, and a temperature sensor 14 arranged at the first end portion 13a of the second elongate element 13, wherein the temperature sensor 14 is configured to provide a temperature signal. The food arrangement 7 comprises a connection element 54 pivotably connecting the second end portion 8b of the first elongate element to the second end portion 13b of the second elongate element.

In particular, and as shown in Figs. 7 to 9, the temperature probe may be a second temperature probe and the temperature sensor 14 may be a second temperature sensor 11 configured to provide a second temperature signal, and the first part 50 may be or may comprise a first temperature probe 5 having a first temperature sensor 9 arranged at the first end portion 8a of the first elongate element 8 and being configured to be positioned in thermal contact with food and to provide a first temperature signal.

The first part 50 or the first temperature probe 5 preferably comprises the control module 20 and/or the electrical energy storage element 22 arranged within the first elongate element 8 (similar to the first temperature probe 4 in Fig. 1) described with respect to Fig. 1. The first temperature probe 5 is preferably used for measuring a core temperature of a food. The food protects the first temperature probe 5 and in particular the control module 20 and/or the electrical energy storage element 22 from high temperatures e.g. temperatures above 85°C. Preferably, the second temperature probe 11 does not comprise a control module and an energy storage element (similar to the second temperature probe 10 in Fig. 1). The control module 22 and/or the electrical energy storage element 22 may have a similar function as described with respect to Figs. 1 and 2.

The transmission module 24 may be arranged between the first and second temperature probes 5, 11. Preferably, the transmission module 24 is arranged at or adjacent to the connection element 54 such that in a fully collapsed or inserted state of the food probe arrangement 7, the transmission module 24 is positioned at or adjacent to the second end portion 8b of the second elongate element 13.

The food probe arrangement 7 may comprise a housing 41 arranged at the second end portions 8b, 13b of the first and second elongate elements 8, 13. Preferably, the connection element 54 and/or the transmission module 24 are arranged at or within or are integrated in the housing 41.

As shown in Figs. 7 to 9, the second elongate element 13 may comprise a recess 56 which is configured such that in a fully collapsed or folded state of the first elongate element 8 (as shown in Fig. 7), the first elongate element 8 is at least partially accommodated in the recess 56 of the second elongate element 13. Preferably, in a fully collapsed or folded state of the first elongate element 8, the control module 20 and/or the energy storage element 22 are arranged in the recess 56. Thus, the food probe arrangement 7 can be used in the fully collapsed or folded state of the first elongate element 8 as shown in Fig. 7 for measuring a core temperature of a food. The control module 20 and/or the energy storage element 22 are thus protected by the food from high temperatures.

The connection element 54 may be or may comprise a hinge pivotably connecting the first and second elongate elements 8, 13 so that the first elongate element 8 is pivotable by a pivoting angle P with respect to the second elongate element 13. Preferably, an electrical connection extends from the (second) temperature probe 11 through the connection element 54 to the first part 50 or the first temperature probe 5 so that the temperature signal from the (second) temperature sensor 14 in the (second) temperature probe 11 can be transmitted to the control module 20 of the first part 50 or the first temperature probe 5.

As shown in Figs. 8 and 9, when using the food probe arrangement 7 for measuring a temperature of a cooking medium in a pan or pot on a hob, the first elongate element 8 is pivotable or extendable with respect to the second elongate element 13 of the (second) temperature probe to such an extent that the first elongate element 8 does not come into contact with the cooking medium. For example, when the first elongate element 8 is partially pivoted with respect to the second elongate element 13 as shown in Fig. 8, the first elongate element 8 may be used as a holding element for holding the food probe arrangement 7 at an edge of a pot or pan.

Fig. 10 is a schematic drawing showing a perspective view of a food probe kit 60. The food probe kit 60 comprises the temperature probe 10 as described with respect to Figs. 1 and 2 (i.e. the temperature probe 10 preferably does not comprise a control module and/or an electrical energy storage element, but only the temperature sensor 14 arranged within the elongate element 12) and the handle 36 and/or the electrical connection line 58. The temperature probe 10 preferably comprises the electrical coupling element 32 arranged at the second end portion 12b, wherein the electrical coupling element 32 is selectively electrically and mechanically connectable to the handle 36 and to the electrical connection line 58. In particular, Fig. 11 shows a state in which the temperature probe 10 is connected to the handle 36 and Fig. 12 shows a state in which the temperature probe 10 is connected to the electrical connection line 58.

In particular, the electrical connection line 58 may comprise a first electrical coupling element 58a configured to be connected to the electrical coupling element 32 of the temperature probe 10 and a second electrical coupling element 58b configured to be connected to a control module, in particular a control module of a food preparation apparatus.

The temperature probe 10 may comprise a housing 26 arranged at the second end portion 12b, wherein the electrical coupling element 32 is arranged within, at or integrated in the housing 26.

For example, when using the temperature probe 10 for measuring a temperature of a food on the hob, the temperature probe 10 may be connected to the handle 36 so that the temperature probe 10 can be fixed to or held at an edge of a pot or pan. For example, when using the temperature probe 10 for measuring a temperature of a food in the oven, the temperature probe 10 may be connected to the electrical connection line 58.

### Reference Numeral List

- 2, 3, 7: food probe arrangement
- 4, 5: (first) temperature probe
- 6, 8: first elongate element
- 6a, 8a: first end portion of first elongate element
- 6b, 8b: second end portion of first elongate element
- 9: (first) temperature sensor
- 10, 11: second temperature probe
- 12, 13: second elongate element
- 12a, 13a: first end portion of second elongate element
- 12b, 13b: second end portion of second elongate element
- 14: second temperature sensor
- 20, 37: control module / control module of handle
- 22: electrical energy storage element
- 24, 38: transmission module / transmission module of handle
- 26, 28: first / second housing
- 30, 32: first / second electrical coupling element
- 34: electrical contact
- 35: electrical coupling element of handle
- 36: handle
- 40, 41: housing
- 42: holding element
- 44, 46: first / second sleeve element
- 48: recess of second sleeve element
- 50: first part
- 52: second part
- 54: connection element (e.g. hinge element)
- 56: recess of temperature probe
- 58: electrical connection line
- 58a, 58b: first / second electrical coupling element of connection line
- 60: food probe kit
- P: pivoting angle
- L1, L2: main extension axis of first / second elongate element
- M: marker

## Claims

1. Food probe arrangement (2, 3) comprising:
a first temperature probe (4) having:
a first elongate element (6) having a first end portion (6a) and a second end portion (6b) opposite to the first end portion (6a), and
a first temperature sensor (9) arranged at the first end portion (6a) of the first elongate element and being configured to provide a first temperature signal, and
a second temperature probe (10) having:
a second elongate element (12) having a first end portion (12a) and a second end portion (12b) opposite to the first end portion (12a), and
a second temperature sensor (14) arranged at the first end portion (12a) of the second elongate element and being configured to provide a second temperature signal,
wherein the second end portion (6b) of the first elongate element (6) is permanently or detachably electrically connected to the second end portion (12b) of the second elongate element (12).

2. Food probe arrangement according to claim 1, wherein the first temperature probe (4) comprises:
a control module (20) arranged within the first elongate element (6) and being configured to receive the first and second temperature signals from the first and second temperature sensors (9, 14), and/or
an electrical energy storage element (22) arranged within the first elongate element (6),
wherein preferably, the second temperature probe (10) does not comprise a control module and an energy storage element.

3. Food probe arrangement according to claim 2,
wherein the control module (20) is adapted to convert the first and/or second temperature signal into a radio signal compatible to be wirelessly transmitted,
wherein the first or second temperature probe (4, 10) comprises a transmission module (24) arranged at the second end portion (6b, 12b) of the first or second elongate element (6, 12), and
wherein the transmission module (24) is configured to receive the radio signal and to transmit wirelessly the radio signal to a food preparation device or to a mobile device configured for communicating with a food preparation device.

4. Food probe arrangement according to any of the preceding claims, wherein in a permanently or detachably connected state of the first and second temperature probes (4, 10), the longitudinal main extension axis (L1) of the first elongate element (6) of the first temperature probe is linearly aligned with the longitudinal main extension axis (L2) of the second elongate element (12) of the second temperature probe and wherein the second end portions (6b, 12b) are arranged side by side while the first end portions (6a, 12b) form the outer portions of the connected temperature probes (4, 10).

5. Food probe arrangement according to any of the preceding claims, wherein the food probe arrangement (2, 3) comprises a housing (40) removably or permanently arranged around a section of the food probe arrangement (2, 3) such that the second end portions (6b, 12b) of the first and second elongate elements (6, 12) are arranged within the housing (40),
wherein preferably, the housing (40) comprises or forms a holding element (42) for holding the food probe arrangement (2, 3) at an edge of a pot or pan such that the second temperature probe (10) is in thermal contact with a cooking medium in the pot or pan and the first temperature probe (4) does not come into contact with a cooking medium within the pot or pan.

6. Food probe arrangement according to any of the preceding claims,
wherein the first temperature probe (4) is detachably mechanically connected to the second temperature probe (10),
wherein the first temperature probe (4) comprises a first electrical coupling element (30) arranged at the second end portion (6b) of the first elongate element,
wherein the second temperature probe (10) comprises a second electrical coupling element (32) arranged at the second end portion (12b) of the second elongate element, and
wherein the first electrical coupling element (30) is detachably connected to the second electrical coupling element (32).

7. Food probe arrangement according to claim 6, wherein, when the first temperature probe (4) is detached from the second temperature probe (10),
the first electrical coupling element (30) is configured to be electrically connectable to an electrical connection line (58), and wherein the first temperature sensor (9) is configured to provide the first temperature signal to a control module connected to the electrical connection line (58), and/or
the second electrical coupling element (32) is configured to be electrically connectable to a handle (36) for handling the second temperature probe, and wherein the second temperature sensor (14) is configured to provide the second temperature signal to a control module (37) of the handle which preferably communicates with a transmission module (38) of the handle.

8. Food probe arrangement (4) comprising:
a first part (50) having a first elongate element (8) having a first end portion (8a) and a second end portion (8b) opposite to the first end portion (8a), and
a second part (52) being a temperature probe (11) having:
a second elongate element (13) having a first end portion (13a) and a second end portion (13b) opposite to the first end portion (13a), and
a temperature sensor (14) arranged at the first end portion (13a) of the second elongate element (13), wherein the temperature sensor (14) is configured to provide a temperature signal, and
a connection element (54) pivotably connecting the second end portion (8b) of the first elongate element (8) to the second end portion (13b) of the second elongate element (13), and/or
wherein the second elongate element (13) has a receptacle and is configured to at least partially receive the first elongate element (8) within the receptacle.

9. Food probe arrangement according to claim 8, wherein the temperature probe is a second temperature probe (11) and the temperature sensor (14) is a second temperature sensor configured to provide a second temperature signal, and wherein the first part (50) is or comprises a first temperature probe (5) having a first temperature sensor (9) arranged at the first end portion (8a) of the first elongate element (8) and being configured to be positioned in thermal contact with food and to provide a first temperature signal.

10. Food probe arrangement according to claim 8 or 9, wherein the first part (50) or the first temperature probe (11) comprises a control module (20) configured to receive the second temperature signal from the (second) temperature sensor (14) and optionally the first temperature signal from the first temperature sensor (9) and/or an electrical energy storage element (22) arranged within the first elongate element (8),
wherein preferably, the second temperature probe (11) does not comprise a control module and an energy storage element.

11. Food probe arrangement according to claim 10,
wherein the control module (20) is adapted to convert the first and/or second temperature signal into a radio signal compatible to be wirelessly transmitted,
wherein the second temperature probe (11) or the first part (50) or the first temperature probe (5) comprises a transmission module (24) arranged at the second end portion (8b, 13b) of the first or second elongate element (8, 13), and
wherein the transmission module (24) is configured to receive the radio signal and to transmit wirelessly the radio signal to a food preparation device or to a mobile device configured for communicating with a food preparation device,
wherein preferably, the transmission module (24) is arranged at or adjacent to the connection element (54) such that in a fully collapsed or inserted state of the food probe arrangement (4), the transmission module (24) is positioned at or adjacent to the second end portion (13b) of the second elongate element (13).

12. Food probe arrangement according to claim 8 to 11,
wherein the first elongate element (8) is pivotably connected to the second elongate element (13), and the second elongate element (13) comprises a recess (56) which is configured such that in a fully collapsed or folded state of the first elongate element (8), the first elongate element (8) is at least partially accommodated in the recess (56) of the second elongate element (13), or
wherein the second elongate element (13) has a main extension axis and the first elongate element (8) is received in the receptacle in such a way that the first elongate element (8) is at least partially insertable into the receptacle along the main extension axis of the second elongate element,
wherein preferably a control module (20) and/or an energy storage element (22) arranged within the first elongate element (8) are arranged in the receptacle in a fully inserted state of the food probe arrangement (4).

13. Food probe arrangement according to any of claims 8 to 12, wherein, when using the food probe arrangement (4) for measuring a temperature of a cooking medium in a pan or pot on a hob, the first elongate element (8) is pivotable or extendable with respect to the second elongate element (13) of the second temperature probe (11) to such an extent that the first elongate element (8) does not come into contact with the cooking medium.

14. Temperature probe (10) having:
an elongate element (12) having a first end portion (12a) and a second end portion (12b) opposite to the first end portion (12a),
a temperature sensor (14) arranged at the first end portion (12a) and configured to provide a temperature signal, and
an electrical coupling element (32) arranged at the second end portion (12b),
wherein the electrical coupling element (32) is selectively electrically and mechanically connectable to a handle (36) and to an electrical connection line (58).

15. Food probe kit (60) comprising:
a temperature probe (10) according to claim 14, and
a handle (36) comprising a control module (37) and a transmission module (38) configured for wireless signal transmission to a control module of a food preparation device or to a mobile device configured for communicating with a food preparation device, and/or
an electrical connection line (58) being configured to provide an electrical connection between the electrical coupling element (32) and a control module, preferably of a food preparation device, or to a mobile device configured for communicating with a food preparation device.
